# EUROPÄISCHE PATENTSCHRIFT

(11) **EP 3 768 905 B1**
(45) Veröffentlichungstag und Bekanntmachung des Hinweises auf die Patenterteilung: **27.04.2022**
(21) Anmeldenummer: 19711238.6
(22) Anmeldetag: 26.02.2019
(51) Int. Cl.: E03D 5/014, E03D 11/02

(54) **TRENNTOILETTE**
SEPARATING TOILET
TOILETTE À SÉPARATEUR

(30) Priorität: 19.03.2018 AT 502272018
(43) Veröffentlichungstag der Anmeldung: 27.01.2021
(73) Patentinhaber: Eoos Design GmbH, 1010 Wien (AT)
(72) Erfinder: BERGMANN, Martin, 1180 Wien (AT); BOHMANN, Gernot, 1010 Wien (AT); GRUENDL, Harald, 1030 Wien (AT)
(74) Vertreter: Speringer, Markus
(86) Internationale Anmeldenummer: PCT/AT2019/060064
(87) Internationale Veröffentlichungsnummer: WO 2019/178622

(56) Entgegenhaltungen:
- WO-A1-2014/003686
- CN-U- 204 040 155
- DE-A1- 10 051 280
- DE-C2- 10 051 280
- JP-A- 2000 001 891

## Beschreibung

### Technisches Gebiet

Die Erfindung betrifft eine Trenntoilette umfassend eine Muschel mit einem im Abflussbereich angeschlossenen Rohrabschnitt mit zumindest abschnittsweise senkrechten Seitenwandungen sowie einer stromabwärts des Rohrabschnitts angeschlossenen Hauptableitung, wobei zwischen dem Rohrabschnitt und der Hauptableitung ein Geruchsverschluss vorgesehen ist, und wobei zumindest eine separate Nebenableitung zur Abtrennung von Urin vorgesehen ist.

### Stand der Technik

Bei Trenntoiletten besteht die Aufgabe darin, Fäkalien und Urin sowie gegebenenfalls das Spülwasser weitgehend voneinander zu trennen, damit die einzelnen Komponenten unabhängig voneinander weiterverarbeitet werden können. Gerade in Entwicklungsländern ist die Entsorgung von menschlichen Ausscheidungen ein großes Umweltproblem und belastet den Boden sowie die Gewässer. Durch Trenntoiletten wird es erleichtert, die einzelnen Komponenten einer Weiterverwertung, beispielsweise als Dünger, zuzuführen, ohne dass ein aufwendiges Kanalisations- und Kläranlagensystem notwendig ist. Als Trenntoiletten kommen dabei zumeist Systeme zum Einsatz, welche eine Hauptableitung für Fäkalien und eine Nebenableitung für Urin aufweisen, wobei beide Ableitungen zumeist an jeweiligen Auslassbereichen einer Muschel angeordnet sind und die Muschel entsprechend eine Trennwand, oder einen mittigen Steg aufweist, um die beiden Bereiche voneinander zu trennen. Diese Einrichtungen erfordern also eine gewisse Disziplin der Anwender bei der Benutzung, da sich der Nutzer richtig platzieren muss, um in die jeweils zugeordneten Auslassbereiche zu treffen. Gerade bei Kindern ergibt sich dabei das Problem, dass diese die für Erwachsene normierten Toiletten kaum richtig benutzen können, sodass entweder Fäkalien oder Urin in die falsche Ableitung gelangen.

Auch in den Industrieländern gibt es zunehmend Bestrebungen Trenntoiletten zu verwenden, um eine ökonomische und umweltfreundliche Art der Verarbeitung der Ausscheidungen zu ermöglichen. Damit sich ein Trenntoilettensystem hier behaupten kann, müssen zusätzlich Aspekte wie der Komfort und die leichte Reinigung der Toilette berücksichtigt werden. Systeme, welche zu aufwendig im Einbau, in der Benutzung oder in der Reinigung sind, haben so gut wie keine Chancen, sich am Markt durchzusetzen. Ein Beispiel für eine sehr komplexe Trenntoilette ist eine von der Firma Rödiger gefertigte Separationstoilette. Neben der oben erwähnten speziell geformten Muschel wird hier zusätzlich eine komplizierte Ventilsteuerung vorgesehen, welche über den Druck des Benutzers auf der WC-Brille ein Ventil für den Urinabfluss freigibt. Diese Vorrichtung ist damit komplex im Aufbau und sehr fehleranfällig und wartungsintensiv.

Die JP 2000 001891 A zeigt ebenfalls eine kompliziert aufgebaute Trenntoilette mit den oben beschriebenen Nachteilen. Einerseits befindet sich dich Eingangsöffnung für die Urinableitung am Muschelgrund und erfordert ein entsprechendes "Zielen" des Benutzers. Auf der anderen Seite wird eine zusätzliche Spülwasserableitung mit einer Eingangsöffnung oberhalb eines klappenförmigen Geruchsverschlusses offenbart, welche ebenfalls in Richtung der Urinableitung führt. Die Trennung zwischen Spülwasser und Urin erfolgt hier nur über eine Ventilsteuerung innerhalb der Urinableitung, wodurch der Aufbau der entsprechenden Toilette deutlich verkompliziert ist.

Eine möglichst einfach aufgebaute Trockentrenntoilette ist die sogenannte Otji-Toilette (otjitoilet.org). Bei dieser Trenntoilette befindet sich nachgeordnet einem Auslassrohrabschnitt eine ringförmige Nut in den Seitenwandungen, wobei Urin über die Oberflächenspannung entlang der Seitenwandungen in diese Nut und in Folge über eine Nebenableitung abgeleitet wird. Diese für Entwicklungsländer entwickelte Toilette bietet den Vorteil, dass sie gleich wie eine herkömmliche Toilette verwendet werden kann. Prinzipiell ist sie jedoch als Trockentoilette ausgelegt, bzw. als Toilette, welche den Urin einfach in den Boden leitet und ihn nicht einer weiteren Verarbeitung zuführt. Die Fäkalien werden einfach über ein Fallrohr nach unten abgeleitet. Würde eine Spülung verwendet werden, was aufgrund der Tatsache, dass es sich um eine Trockentoilette handelt, nicht vorgesehen ist, so würde diese ebenfalls zum Großteil über die Nebenableitung abfließen, was bei einer Weiterverarbeitung des konzentrierten Urins unerwünscht ist. Auch ist die Ringnut aufgrund der Größe und Position schlecht zu reinigen. Hat der Benutzer Durchfall, so würde bei dieser Konstruktion ebenfalls ein Großteil der Fäkalien in die Nebenableitung gelangen und diese verunreinigen oder schlimmstenfalls verstopfen.

### Darstellung der Erfindung

Es ist somit Aufgabe der vorliegenden Erfindung, eine Trenntoilette zu schaffen, die eine konzentrierte Ableitung sowie Sammlung von Urin über eine Nebenableitung ermöglicht, wobei die Toilette sowohl als Trocken-, Vakuum- oder Spültoilette verwendbar sein soll. Die Toilette soll genauso benutzbar sein wie eine herkömmliche Toilette und eine einfache Reinigung erlauben.

Diese Aufgabe wird erfindungsgemäß dadurch gelöst, dass die Eingangsöffnung der Nebenableitung an einer Seite der senkrechten Seitenwandung des Rohrabschnitts und damit unterhalb der Muschel und oberhalb des Geruchsverschlusses angeordnet ist, und dass der Übergangsbereich an der Oberkante der Eingangsöffnung der Nebenableitung zur senkrechten Seitenwandung des Rohrabschnitts abgerundet ausgebildet ist. Die Ableitung erfolgt damit nicht rundherum am Ende des Fallrohrs sondern nur in jenem Bereich, an dem der Großteil des Urins bei herkömmlicher Verwendung abfließt. Hier wird der sogenannte Teekanneneffekt ausgenutzt, bei welchem aufgrund unterschiedlicher Kriterien wie Luftdruck, Strömungsgeschwindigkeit, Oberflächenspannung der Flüssigkeit sowie Geometrie und Beschaffenheit des Materials ein Anhaften und Umlenken des Urinstroms in die Eingangsöffnung der Nebenableitung erreicht wird. Luftdruck und Oberflächenspannung der Flüssigkeit sind hier vorgegeben. Ebenso handelt es sich bei der Materialbeschaffenheit üblicherweise um Keramik oder Edelstahl mit vergleichbaren Eigenschaften. Die Strömungsgeschwindigkeit ist aufgrund der Flüssigkeitsmenge beim Urinieren ebenfalls innerhalb eines überschaubaren Bereichs. Der vom Fachmann auszuwählende Faktor besteht folglich in der Wahl der passenden Geometrie der Schüssel und der Position der Eingangsöffnung der Nebenableitung, um eine effektive Umleitung des Urinstroms zu erreichen. Die Eingangsöffnung liegt dabei direkt unterhalb der Muschel und oberhalb eines üblicherweise vorgesehenen Geruchsverschlusses, wodurch sie auch einfach zu reinigen ist und bei einer Vielzahl unterschiedlicher Toilettenarten und Kanalanschlüssen einsetzbar ist. Der Grad der Abrundung kann je nach Höhe und Bauart der Toilette und des entsprechenden Rohrabschnitts gewählt werden, damit ein Großteil des Urins durch die Oberflächenspannung der Flüssigkeit und dem damit verbundenen Anhaften an der Seitenwandung in die Eingangsöffnung geleitet wird. Auch das Vorsehen einer Spülung, welche hauptsächlich über die Hauptableitung abfließen soll, ist dadurch ermöglicht. Ein zusätzlicher Vorteil ist, dass keinerlei komplexe Einbauten, wie Ventilsteuerungen, Sensoren oder ähnliches, benötigt werden. Die Herstellungskosten sind dadurch nicht höher als bei einer herkömmlichen Toilette und auch die Reinigung ist gleich einfach. Da keine zusätzlichen Ventile oder ähnliches benötigt werden, besteht auch kein besonderer Wartungsaufwand gegenüber herkömmlichen Toiletten.

Dabei ist es ein weiteres Merkmal der vorliegenden Erfindung, dass die Eingangsöffnung der Nebenableitung mittig an der vorderen Seitenwandung des Rohrabschnitts angeordnet ist. Dies ist die vorwiegende Position für Hocktoiletten oder auch Sitztoiletten, bei welchen alle Nutzer gleich positioniert sind. Der Urin fließt dabei über den vorderen Bereich der Muschel in Richtung Rohrabschnitt und damit auch über jenen Seitenwandungsabschnitt, an dem die Eingangsöffnung der Nebenableitung ist, wodurch der Urin über die Oberflächenspannung der Flüssigkeit an der Seitenwandung in die Eingangsöffnung geleitet wird. Kinder, welche eine herkömmliche Sitztoilette verwenden, sitzen tendenziell ebenfalls eher am vorderen Rand der Muschel, weshalb auch hier eine korrekte Ableitung des Urins stattfindet, während die Fäkalien auch in dieser Sitzposition korrekt in die Hauptableitung gelangen.

Gemäß einer möglichen Ausführungsform ist es vorgesehen, dass der Geruchsverschluss durch eine schwenkbare Klappe gebildet ist. Diese Art des Geruchsverschlusses ist nicht die häufigste bei Toiletten, die an eine Kanalsystem angeschlossen sind, kann aber zusätzliche Vorteile bringen, wenn beispielsweise auch eine Spülwasserrückführung vorgesehen werden soll.

Dabei kann gemäß einem zusätzlichen vorteilhaften Merkmal vorgesehen sein, dass eine separate Spülwasserableitung vorgesehen ist, und dass die schwenkbare Klappe über eine Steuerung verfügt, damit wahlweise die Hauptableitung oder die Spülwasserableitung freigebbar ist. Durch die Klappe sowie eine zusätzliche Steuerung kann auch unterschieden werden, wann Fäkalien anfallen und wann nicht. Entsprechend kann beispielsweise ein Großteil des Spülwassers recycelt werden, wenn keine Fäkalien eingebracht werden, oder aber es werden Fäkalien und Spülwasser in die Hauptableitung geleitet.

Gemäß einer alternativen Ausführungsform ist es vorgesehen, dass der Geruchsverschluss durch einen Siphon ausgebildet ist, wobei die Oberkante eines stromabwärts des Siphons gelegenen Abflussrohrs niedriger angeordnet ist als die Unterkante der Eingangsöffnung der Nebenableitung. Dies ist die häufigste Variante des Geruchsverschlusses bei Toiletten, die an ein Kanalsystem angeschlossen sind. Dabei steht eine Wassersäule im Inneren des Siphons und verhindert somit den Durchtritt von Gerüchen aus dem Abflussrohr. Da die Oberkante des Abflussrohrs unterhalb der Unterkante der Einlassöffnung der Nebenableitung liegt, kann niemals das Wasser aus dem Siphon bis zur Nebenableitung gelangen, wodurch eine Fehlableitung des Wassers über die Urinableitung vermieden wird.

Es ist ein weiteres vorteilhaftes Merkmal, dass in der Muschel zumindest zwei nebeneinander angeordnete Spülwassereinlassöffnungen vorgesehen sind, durch welche das Spülwasser in im Wesentlichen entgegengesetzte seitliche tangentiale Richtungen in die Muschel einleitbar ist, wobei die Durchflussmenge der beiden Spülwassereinlassöffnungen derart unterschiedlich voneinander eingestellt ist, dass die beiden entgegengesetzten Spülwasserströme am oberen Ende des Rohrabschnitts bei einem zur Eingangsöffnung der Nebenableitung benachbarten und/oder abgewandten Seitenwandungsabschnitt aufeinander treffen. Normale Toilettenspülungen verteilen einen Spülwasserstrom in einem um den Muschelrand gelagerten Hohlraum, welcher mehrere nach unten hin gerichtete Öffnungen aufweist, sodass über den gesamten Muschelwandungsbereich ein gleichmäßiger Spülwasservorhang gebildet wird. Bei einer Trenntoilette gemäß der vorliegenden Erfindung würde dies dazu führen, dass das Spülwasser zumindest anteilig durch die Oberflächenspannung der Flüssigkeit an der Seitenwandung in die Nebenableitung gelangt, was unerwünscht ist. Um eine besonders einfach zu reinigende Toilettenmuschel ohne überhängenden Randbereichen zu realisieren, wurden in den letzten Jahren eigene Spülungen für sogenannte "randlose" Muscheln entwickelt. Dabei wird im hinteren oberen Bereich der Muschel eine Spülwassereinleitung montiert, welche die Spülwasserströme tangential zu den Seiten und gegebenenfalls direkt nach unten aufteilt. Die beiden tangentialen Spülwasserströme laufen dabei entlang der Muschelwandungen aufeinander zu und treffen im vorderen Bereich der Muschel aufeinander, verwirbeln an diesem Punkt und laufen in den Abflussbereich. Diese Spülungen würden daher ebenfalls einen Großteil des Spülwassers in die Nebenableitung leiten. Aus diesem Grund werden in einer bevorzugten Ausführungsform gemäß oben genanntem Merkmal die beiden aufeinander zulaufenden tangentialen Spülwasserströme asymmetrisch eingeleitet, wodurch einer der beiden Ströme mit mehr Durchflussvolumen am vorderen Bereich der Muschel vorbeifließt und erst an der Seite auf den schwächeren gegenläufigen Spülwasserstrom trifft. Der Verwirbelungspunkt liegt also nicht über der Nebenableitung und der Großteil des abfließenden Spülwassers rinnt folglich an einer Seitenwandung des Rohrabschnitts ab, welcher neben der Eingangsöffnung der Nebenableitung liegt. Es gerät somit kaum Spülwasser in die Nebenableitung, weshalb der konzentriert abgeführte Urin einer Weiterverarbeitung zugeführt werden kann.

Gemäß einer möglichen vorteilhaften Ausführungsform ist es vorgesehen, dass ausgehend vom Boden der Muschel im Abschnitt oberhalb der Eingangsöffnung für die Nebenableitung ein Vorsprung in Form eines Überhangs über der Eingangsöffnung ausgebildet ist. Der Überhang begünstigt den Strömungsabriss des Spülwassers oberhalb der Nebenableitung, verhindert aber den Abriss eines Urinstroms, was zu einer effektiveren Trennung des Urins führt. Ein weiterer Vorteil des Vorsprungs besteht darin, dass die Eingangsöffnung der Nebenableitung durch den Überhang optisch weniger einsehbar ist.

Es ist in einer alternativen vorteilhaften Ausführungsform vorgesehen, dass im Boden der Muschel ein mittiger tiefergelegener abgestufter Abschnitt vorgesehen ist, wobei die Kanten der beiden den Abschnitt seitlich begrenzenden Stufen in Richtung der Hauptableitung aufeinander zulaufend angeordnet sind. Durch den nach unten hin abgestuften Abschnitt im Boden der Muschel wird der auftreffende Urinstrom durch die seitlichen Stufen gezielt in Richtung Eingangsöffnung der Nebenableitung geleitet. Je nach Ausbildung der Muschel können die seitlich begrenzenden Stufen gerade oder auch bogenförmig ausgebildet sein, um den Urinstrom ideal in Richtung der Eingangsöffnung zu leiten.

Dabei ist es schließlich ein weiteres vorteilhaftes Merkmal, dass der Abstand der Kanten der beiden den Abschnitt seitlich begrenzenden Stufen an ihrem der Hauptableitung nächstgelegenen Ende einen Abstand voneinander aufweisen, welcher maximal der Breite der Eingangsöffnung entspricht, und dass die Kanten symmetrisch zur Eingangsöffnung hin ausgerichtet sind. Damit eine möglichst vollständige Abtrennung des Urinstroms über die Nebenableitung erfolgt, ist es vorteilhaft, wenn die Kanten des abgestuften Abschnitts am Ableitungsnahmen Ende oberhalb der Nebenableitung enden. Der Abstand der beiden Kanten an diesem Ende kann folglich maximal der Breite der Eingangsöffnung der Nebenableitung entsprechen, oder kleiner ausgebildet sein, damit kein Anteil des Urinstroms an der Eingangsöffnung seitlich vorbeigeleitet wird.

### Kurze Beschreibung der Zeichnungen

Die Erfindung wird nun in größerem Detail anhand von Ausführungsbeispielen sowie mit Hilfe der beiliegenden Figuren beschrieben. Dabei zeigen
Fig. 1 eine schematische Schnittansicht durch eine erste Ausführungsform einer erfindungsgemäßen Trenntoilette,
Fig. 2 eine schematische Schnittansicht durch eine alternative Ausführungsform einer erfindungsgemäßen Trenntoilette,
Fig. 3 eine schematische Ansicht einer erfindungsgemäßen Trenntoilette mit eingezeichneten Spülwasserströmen,
Fig. 4 zeigt eine schematische Schnittansicht einer alternativen Ausführungsform mit einem Überhang oberhalb des Eingangsöffnung,
Fig. 5 zeigt eine schematische Ansicht einer alternativen Ausführungsform mit einem mittigen tiefergelegenen abgestuften Abschnitt und
Fig. 6 zeigt eine schematische Ansicht einer weiteren Ausführungsform mit einer größtenteils schräg verlaufenden Hauptableitung.

### Weg(e) zur Ausführung der Erfindung

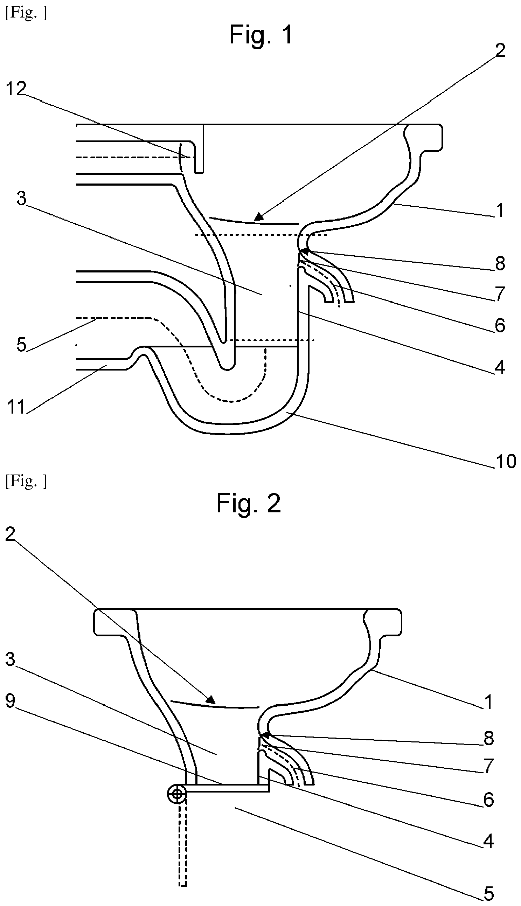

Die in Fig. 1 gezeigte schematische Darstellung einer möglichen Ausführungsform einer erfindungsgemäßen Toilette umfasst eine Muschel 1, an deren tiefstem Punkt sich der Abflussbereich 2 befindet. Hier geht die Muschel 1 in einen Rohrabschnitt 3 über, welcher durch punktierte Linien angedeutet ist. Der Rohrabschnitt 3 weist zumindest abschnittsweise senkrechte Seitenwandungen 4 auf. Am unteren Ende des Rohrabschnitts 3 befindet sich ein Geruchsverschluss, welcher gemäß der in Fig. 1 gezeigten Ausführungsform durch einen Siphon 10 gebildet ist. Stromabwärts des Siphons 10 befindet sich die Hauptableitung 5, welche hier durch ein Abflussrohr 11 gebildet ist.

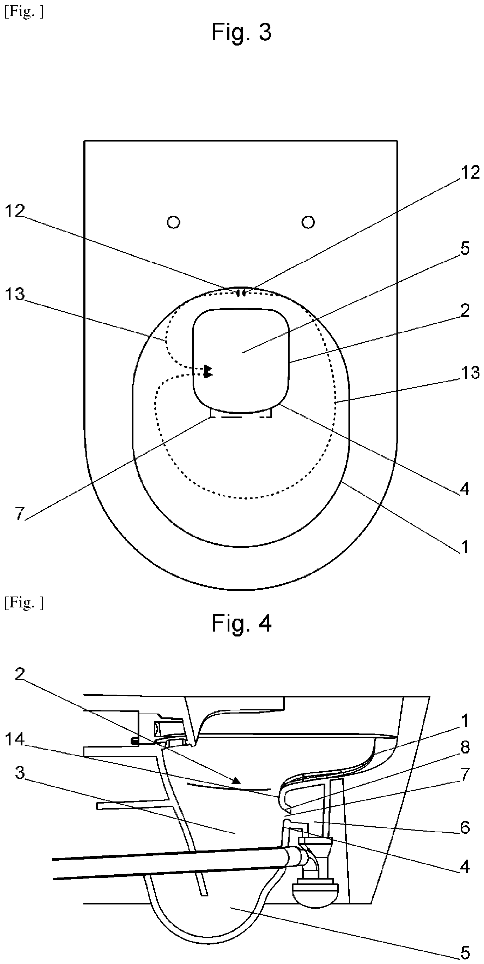

In der vorderen senkrechten Seitenwandung 4 des Rohrabschnitts 3 ist eine Eingangsöffnung 7 einer Nebenableitung 6 angeordnet. Mit "vorne" ist hinsichtlich der Toilette jene Seite gemeint, welche von einem darauf sitzenden Nutzer als vorne anzusehen ist, während "hinten" im Allgemeinen die der Wand zugewandte Seite der Toilette meint. Die Eingangsöffnung 7 schließt eben mit der betreffenden Seitenwandung 4 ab, wobei der Übergangsbereich 8 an der Oberkante der Eingangsöffnung 7 zur Seitenwandung 4 hin abgerundet ist. Der bei der Benutzung im vorderen Bereich der Muschel auftreffende Urin wird über die Oberflächenspannung der Flüssigkeit entlang der Wandungen der Muschel 1 und der Seitenwandungen des Rohrabschnitts 3 zu der Eingangsöffnung 7 und schließlich in die Nebenableitung 6 geleitet und kann so konzentriert separat abgeleitet und einer Weiterverarbeitung zugänglich gemacht werden. In der Ausführungsform gemäß Fig. 1 ist auch eine Spülwassereinlassöffnung 12 dargestellt, wobei diese näher in Fig. 3 besprochen wird.

In der Fig. 2 ist eine Ausführungsform gezeigt, bei welcher der Geruchsverschluss durch eine schwenkbare Klappe 9 gebildet ist. Die Ausgestaltung der Nebenableitung 6 ist gleich, wie bei der Ausführungsform aus Fig. 1. Die schwenkbare Klappe 9 kann beispielsweise bei einer Trockentoilette zum Einsatz kommen oder es kann eine zusätzliche Spülwasserrückführung (nicht gezeigt) vorgesehen sein, wobei dann die Klappe 9 über eine Steuerung verfügt, um je nach Anwendungsfall das Spülwasser einer Wiederverwendung zuzuführen, oder beispielsweise gemeinsam mit Fäkalien in die Hauptableitung 5 einzuleiten.

In Fig. 3 sind die Spülwassereinlassöffnungen 12 sowie die davon ausgeleiteten Spülwasserströme 13 näher dargestellt. Bei der hier gezeigten Ausführungsform handelt es sich um eine sogenannte "randlose" Toilette, welche aufgrund des fehlenden Hohlraums am oberen Rand der Muschel 1 besonders leicht und hygienisch zu reinigen ist. Die Spülwassereinlassöffnungen 12 befinden sich im hinteren oberen Bereich der Muschel. Ein Anteil des Spülwassers wird gerade nach unten in Richtung Rohrabschnitt 3 geleitet, während zwei Spülwasserströme 13 tangential in entgegengesetzte Richtung entlang der Muschelwandungen seitlich eingeleitet werden. Die beiden tangentialen Einlassöffnungen 12 sind asymmetrisch ausgebildet, wodurch sich auch die Durchflussmengen unterscheiden und somit die beiden Spülwasserströme 13 nicht genau gegenüber im vorderen Bereich der Muschel 1 aufeinander treffen, sondern seitlich versetzt. Der stärkere Spülwasserstrom 13 wird also an der Vorderseite der Muschel vorbeigeleitet, ohne dort in den Abflussbereich 2 einzutreten und trifft erst danach auf den entgegenkommenden Spülwasserstrom 13 und fließt gemeinsam mit diesem ab. Dadurch wird der Großteil des Spülwassers an der Eingangsöffnung 7 der Nebenableitung 6 vorbeigeführt und somit, wie gewünscht, über die Hauptableitung 5 abgeführt.

Bei der in der Fig. 4 gezeigten Ausführungsform ist vom Boden der Muschel 1 aus in Richtung Abflussbereich 2 im Abschnitt oberhalb der Eingangsöffnung 7 für die Nebenableitung 6 ein Vorsprung 14 ausgebildet, welcher einen Überhang darstellt. Der Urinstrom, welcher mit geringer Geschwindigkeit über den Boden der Muschel rinnt, wird aufgrund der Oberflächenspannung der Flüssigkeit über diesen Überhang geleitet und gelangt problemlos in die Eingangsöffnung 7 der Nebenableitung 6. Der Spülwasserstrom hingegen, welcher mit deutlich höherer Geschwindigkeit abfließt, reißt an dem Überhang von der Wandung ab und gelangt fast vollständig in die Hauptableitung 5. Der Vorsprung 14 hat ferner den Vorteil, dass er die Eingangsöffnung 7 der Nebenableitung 6 optisch überdeckt und damit schlechter einsehbar macht. Dies hat auch gestalterische Vorteile, da somit eine Trenntoilette gemäß der Erfindung von einer herkömmlichen Toilette optisch so gut wie nicht mehr zu unterscheiden ist.

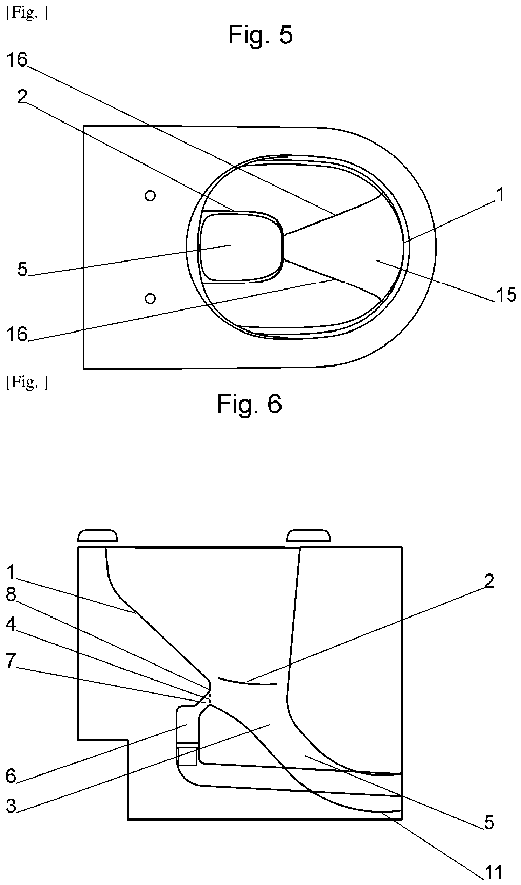

In Fig. 5 ist schließlich ein weiteres bevorzugtes Merkmal einer möglichen Ausführungsform einer erfindungsgemäßen Trenntoilette dargestellt. Hier ist am Boden der Muschel 1 ein mittiger tiefergelegener abgestufter Abschnitt 15 vorgesehen. Die seitlichen Kanten 16 der beiden den Abschnitt 15 begrenzenden Stufen sind in Richtung der Hauptableitung 5 aufeinander zulaufend angeordnet. Die beiden Stufen bilden somit eine Leiteinrichtung für den Urinstrom, welche diesen vollständig in Richtung der Eingangsöffnung 7 der Nebenableitung 6 leiten.

Fig. 6 zeigt schematisch eine weitere mögliche Ausführungsform einer erfindungsgemäßen Trenntoilette. Die Muschel 1 weist hier eine Form auf, wie sie beispielsweise bei vielen Vakuumtoiletten üblich ist. Dabei ist der Boden der Muschel geneigt und verläuft in einem ähnlichen Neigungswinkel über den anschließenden Rohrabschnitt 3 zur Hauptableitung 5. Lediglich in einem Abschnitt um die Eingangsöffnung 7 der Nebenableitung 6 ist die Seitenwandung des Rohrabschnitts 3 senkrecht verlaufend, um die nötige Abtrennung des Urinstroms herbeiführen zu können und um zu vermeiden, dass anderes Abwasser oder Fäkalien in die Nebenableitung 6 gelangen. Es muss also nicht der gesamte Rohrabschnitt 3 senkrecht verlaufend ausgebildet sein, sondern kann sich größtenteils an den üblichen Formen für die jeweilige Toilettenart orientieren. Der senkrechte Abschnitt der Seitenwandung ist lediglich für den Bereich der Eingangsöffnung 7 der Nebenableitung 6 notwendig.

## Patentansprüche

1. Trenntoilette umfassend eine Muschel (1) mit einem im Abflussbereich (2) angeschlossenen Rohrabschnitt (3) mit zumindest abschnittsweise senkrechten Seitenwandungen (4) sowie einer stromabwärts des Rohrabschnitts (3) angeschlossenen Hauptableitung (5), wobei zwischen dem Rohrabschnitt (3) und der Hauptableitung (5) ein Geruchsverschluss vorgesehen ist, und wobei zumindest eine separate Nebenableitung (6) zur Abtrennung von Urin vorgesehen ist, wobei
die Eingangsöffnung (7) der Nebenableitung (6) an einer Seite der senkrechten Seitenwandung (4) des Rohrabschnitts (3) und damit unterhalb der Muschel (1) und oberhalb des Geruchsverschlusses angeordnet ist, **dadurch gekennzeichnet,**
**dass** der Übergangsbereich (8) an der Oberkante der Eingangsöffnung (7) der Nebenableitung (6) zur senkrechten Seitenwandung (4) des Rohrabschnitts (3) abgerundet ausgebildet ist.

2. Trenntoilette nach Anspruch 1, **dadurch gekennzeichnet, dass** die Eingangsöffnung (7) der Nebenableitung (6) mittig an der vorderen senkrechten Seitenwandung (4) des Rohrabschnitts (3) angeordnet ist.

3. Trenntoilette nach Anspruch 1 oder 2, **dadurch gekennzeichnet, dass** der Geruchsverschluss durch eine schwenkbare Klappe (9) gebildet ist.

4. Trenntoilette nach Anspruch 3, **dadurch gekennzeichnet, dass** eine separate Spülwasserableitung vorgesehen ist, und dass die schwenkbare Klappe (8) über eine Steuerung verfügt, damit wahlweise die Hauptableitung (5) oder die Spülwasserableitung freigebbar ist.

5. Trenntoilette nach Anspruch 1 oder 2, **dadurch gekennzeichnet, dass** der Geruchsverschluss durch einen Siphon (10) ausgebildet ist, wobei die Oberkante eines stromabwärts des Siphons (10) gelegenen Abflussrohrs (11) niedriger angeordnet ist als die Unterkante der Eingangsöffnung (7) der Nebenableitung (6).

6. Trenntoilette nach einem der Ansprüche 1 bis 5, **dadurch gekennzeichnet, dass** in der Muschel (1) zumindest zwei nebeneinander angeordnete Spülwassereinlassöffnungen (12) vorgesehen sind, durch welche das Spülwasser in im Wesentlichen entgegengesetzte seitliche tangentiale Richtungen in die Muschel (1) einleitbar ist, wobei die Durchflussmenge der beiden Spülwassereinlassöffnungen (12) derart unterschiedliche voneinander eingestellt ist, dass die beiden entgegengesetzten Spülwasserströme (13) am oberen Ende des Rohrabschnitts (3) bei einem zur Eingangsöffnung (7) der Nebenableitung (6) benachbarten und/oder abgewandten Seitenwandungsabschnitt aufeinander treffen.

7. Trenntoilette nach einem der Ansprüche 1 bis 6, **dadurch gekennzeichnet, dass** ausgehend vom Boden der Muschel (1) im Abschnitt oberhalb der Eingangsöffnung (7) für die Nebenableitung (6) ein Vorsprung (14) in Form eines Überhangs über der Eingangsöffnung (7) ausgebildet ist.

8. Trenntoilette nach einem der Ansprüche 1 bis 7, **dadurch gekennzeichnet, dass** im Boden der Muschel (1) ein mittiger tiefergelegener abgestufter Abschnitt (15) vorgesehen ist, wobei die Kanten (16) der beiden den Abschnitt (15) seitlich begrenzenden Stufen in Richtung der Hauptableitung (5) aufeinander zulaufend angeordnet sind.

9. Trenntoilette nach Anspruch 8, **dadurch gekennzeichnet, dass** der Abstand der Kanten (16) der beiden den Abschnitt (15) seitlich begrenzenden Stufen an ihrem der Hauptableitung (5) nächstgelegenen Ende einen Abstand voneinander aufweisen, welcher maximal der Breite der Eingangsöffnung (7) entspricht, und dass die Kanten symmetrisch zur Eingangsöffnung (7) hin ausgerichtet sind.

## Claims

1. A separating toilet comprising a shell (1) having a pipe section (3), connected in the output area (2), with side walls (4) which are at least sectionally vertical, as well as a main discharge (5) connected downstream of the pipe section (3), wherein between the pipe section (3) and the main discharge (5) an odour trap is provided, and wherein at least one separate secondary discharge (6) for separating of urine is provided, wherein the input port (7) of the secondary discharge (6) is arranged on one side of the vertical side wall (4) of the pipe section (3) and thus below the shell (1) and above the odour trap, **characterised in that** the transition area (8) at the upper edge of the input port (7) of the secondary discharge (6) is formed rounded towards the vertical side wall (4) of the pipe section (3).

2. The separating toilet according to claim 1, **characterised in that** the input port (7) of the secondary discharge (6) is arranged centrally on the front vertical side wall (4) of the pipe section (3).

3. The separating toilet according to claim 1 or 2, **characterised in that** the odour trap is formed by a pivotable flap (9).

4. The separating toilet according to claim 3, **characterised in that** a separate rinsing water discharge is provided, and **in that** the pivotable flap (8) has a controller such that the main discharge (5) or the rinsing water discharge are optionally releasable.

5. The separating toilet according to claim 1 or 2, **characterized in that** the odour trap is formed by a siphon (10), wherein the upper edge of a discharge pipe (11) located downstream of the siphon (10) is arranged lower than the lower edge of the input port (7) of the secondary discharge (6).

6. The separating toilet according to any one of the claims 1 to 5, **characterized in that** at least two rinsing water input ports (12) arranged side by side are provided in the shell (1), through which the rinsing water may be introduced into the shell (1) in substantially opposite lateral tangential directions, wherein the flow rate of the two rinsing water input ports (12) is set different from each other such that the two opposite rinsing water flows (13) meet at the upper end of the pipe section (3) at a side wall section adjacent to and/or distant from the input port (7) of the secondary discharge (6).

7. The separating toilet according to any one of the claims 1 to 6, **characterised in that**, starting from the bottom of the shell (1) in the section above the input port (7) for the secondary discharge (6), a projection (14) in the form of an overhang is formed above the input port (7).

8. The separating toilet according to any one of the claims 1 to 7, **characterised in that** in the bottom of the shell (1) a central lower stepped section (15) is provided, wherein the edges (16) of the two steps laterally confining the section (15) are arranged in the direction of the main discharge (5) so as to converge to each other.

9. The separating toilet according to claim 8, **characterised in that** the distance between the edges (16) of the two steps laterally confining the section (15) include at their nearest end to the main discharge (5) a distance from each other which corresponds at most to the width of the input port (7), and **in that** the edges are oriented symmetrically towards the input port (7).

## Revendications

1. Toilette à séparateur, comprenant une cuvette (1) pourvue d'un segment de tube (3) qui est raccordé dans la zone d'écoulement (2) et qui présente des parois latérales (4) lesquelles sont verticales au moins sur certaines parties et d'un tuyau d'évacuation principal (5) qui est raccordé en aval du segment de tube (3), une barrière anti-odeurs étant disposée entre le segment de tube (3) et le tuyau d'évacuation principal (5), et au moins un tuyau d'évacuation secondaire (6) étant disposé à part pour séparer les urines, l'entrée (7) du tuyau d'évacuation secondaire (6) étant disposée sur un côté de la paroi latérale (4) verticale du segment de tube (3) et donc au-dessous de la cuvette (1) et au-dessus de la barrière anti-odeurs, **caractérisée en ce que** la zone de transition (8) au bord supérieur de l'entrée (7) du tuyau d'évacuation secondaire (6) est réalisée de manière à être arrondie vers la paroi latérale (4) verticale du segment de tube (3).

2. Toilette à séparateur selon la revendication 1, **caractérisée en ce que** l'entrée (7) du tuyau d'évacuation secondaire (6) se trouve en disposition centrale sur la paroi latérale (4) verticale antérieure du segment de tube (3) .

3. Toilette à séparateur selon les revendications 1 ou 2, **caractérisée en ce que** ladite barrière anti-odeurs est réalisée sous forme d'un ouvrant (9) susceptible de pivoter.

4. Toilette à séparateur selon la revendication 3, **caractérisée en ce qu'**elle comporte un tuyau dédié à l'évacuation des eaux de chasse et que l'ouvrant (8) susceptible de pivoter dispose d'une commande permettant de libérer sélectivement le tuyau d'évacuation principal (5) ou le tuyau d'évacuation des eaux de chasse.

5. Toilette à séparateur selon les revendications 1 ou 2, **caractérisée en ce que** la barrière anti-odeurs est réalisée sous forme d'un siphon (10), le bord supérieur d'un tuyau de canalisation (11), disposé en aval du siphon (10), étant situé plus bas que le bord inférieur de l'entrée (7) du tuyau d'évacuation secondaire (6).

6. Toilette à séparateur selon l'une des revendications 1 à 5, **caractérisée en ce qu'**au moins deux entrées d'eau de chasse (12) juxtaposées sont disposées au sein de la cuvette (1) et permettent d'introduire l'eau de chasse dans la cuvette (1) selon deux directions tangentielles latérales qui sont sensiblement opposées l'une à l'autre, les deux entrées d'eau de chasse (12) étant réglées de manière à ce que leurs débits soit différents l'un de l'autre, faisant en sorte que les deux flux d'eau de chasse (13) opposés se joignent à l'extrémité supérieure du segment de tube (3) au niveau d'une partie de paroi latérale qui est adjacente ou distant à l'entrée (7) du tuyau d'évacuation secondaire (6).

7. Toilette à séparateur selon l'une des revendications 1 à 6, **caractérisée en ce qu'**une saillie (14) est formée à partir du fond de la cuvette (1), dans la partie au-dessus de l'entrée (7) destinée au tuyau d'évacuation secondaire (6), de manière à ce qu'elle s'étende en porte-à-faux au-dessus de l'entrée (7).

8. Toilette à séparateur selon l'une des revendications 1 à 7, **caractérisée en ce qu'**une partie centrale (15) constituant un palier de niveau inférieur est prévue dans le fond de la cuvette (1), les bords (16) des étages délimitant latéralement la partie (15) étant disposés de manière à ce qu'ils convergent vers le tuyau d'évacuation principal (5).

9. Toilette à séparateur selon la revendication 8, **caractérisée en ce que** les bords (16) des deux étages délimitant latéralement la partie (15) présentent, à leur extrémité la plus proche du tuyau d'évacuation principal (5), une distance l'un de l'autre qui est inférieure ou égale à la largeur de l'entrée (7) et que lesdits bords sont orientés de manière à s'approcher symétriquement de l'entrée (7).
